Europäisches Patentamt

European Patent Office

Office européen des brevets

(19)

(11) **EP 0 639 625 B1**

(12) **EUROPÄISCHE PATENTSCHRIFT**

(45) Veröffentlichungstag und Bekanntmachung des Hinweises auf die Patenterteilung:
**16.07.1997 Patentblatt 1997/29**

(51) Int Cl.⁶: **C09C 1/04**, C09D 7/12, C09D 11/00, C08K 3/22, H01B 1/08

(21) Anmeldenummer: **94112308.5**

(22) Anmeldetag: **06.08.1994**

(54) **Stabilisiertes, leitfähiges Pigment**

Stabilized conductive pigment

Pigment conducteur stabilisé

(84) Benannte Vertragsstaaten:
**DE ES FR GB IT**

(30) Priorität: **17.08.1993 DE 4327620**

(43) Veröffentlichungstag der Anmeldung:
**22.02.1995 Patentblatt 1995/08**

(73) Patentinhaber: **MERCK PATENT GmbH 64293 Darmstadt (DE)**

(72) Erfinder:
• **Pfaff, Gerhard, Dr.**
  **D-64839 Münster (DE)**
• **Brückner, Hans-Dieter, Dr.**
  **D-64289 Darmstadt (DE)**

(56) Entgegenhaltungen:
**EP-A- 0 404 087          EP-A- 0 405 364
WO-A-91/13120          US-A- 5 171 364**

• **DATABASE WPI Week 9218, Derwent Publications Ltd., London, GB; AN 92-147722 & JP-A-4 089 888 (NICHIA KAGAKU KOGYO) 23. März 1992**
• **DATABASE WPI Week 7710, Derwent Publications Ltd., London, GB; AN 77-17062Y & JP-A-52 009 432 (TOMOEGAWA PAPER MFG.) 25. Januar 1977**
• **DATABASE WPI Week 8130, Derwent Publications Ltd., London, GB; AN 81-54333D & JP-A-56 069 266 (NIPPON KAGAKU SANGY) 10. Juni 1981**
• **DATABASE WPI Week 8220, Derwent Publications Ltd., London, GB; AN 82-39941E & JP-A-57 057 758 (CHUGOKU TORYO)**
• **DATABASE WPI Week 9218, Derwent Publications Ltd., London, GB; AN 92-147722 & JP-A-4 089 888**
• **DATABASE WPI Week 7710, Derwent Publications Ltd., London, GB; AN 77-17062Y & JP-A-52 009 432**
• **DATABASE WPI Week 8130, Derwent Publications Ltd., London, GB; AN 81-54333D & JP-A-56 069 266**
• **DATABASE WPI Week 8220, Derwent Publications Ltd., London, GB; AN 82-39941E & JP-A-57 057 758**

**Beschreibung**

Die Erfindung betrifft ein stabilisiertes, leitfähiges Pigment auf der Basis von Aluminium dotiertem Zinkoxid (AZO).

In vielen Bereichen der Technik besteht ein Bedarf an leitfähigen Pigmenten, mit denen z.B. elektrisch leitfähige, antistatische oder elektromagnetische Wellen abschirmende Kunststoffe, Lacke, Beschichtungen oder Fasern hergestellt werden können. In großen Mengen wird dazu leitfähiger Ruß eingesetzt, der jedoch auf Grund seiner hohen Lichtabsorption im sichtbaren Spektralbereich nicht für transparente, helle oder farbige Beschichtungen verwendet werden kann. Ein weiteres Problem ist die starke Absorption von Ruß im IR-Bereich, was z.B. bei Sonneneinstrahlung zu einer vielfach unerwünschten Erwärmung der beschichteten Gegenstände führt. Für helle Beschichtungen ist deshalb Ruß zunehmend durch Antimon dotiertes Zinnoxid ersetzt worden.

Ein weiteres leitfähiges Pigment, das für helle Beschichtungen geeignet ist, ist Aluminium dotiertes Zinkoxid.

Die DE-OS 40 23 802 beschreibt die Herstellung von nadelförmigem Zinkcarbonat, das als Vorläufer für die Erzeugung von nadelförmigem, elektrisch leitenden Zinkoxid verwendet wird. Bei Dotierung mit Aluminium, Indium, Gallium und Zinn werden hellgraue bis hellbraune Produkte erhalten. Bei Dotierung mit Germanium wird ein weißes Pulver erhalten. Das elektrisch leitende Zinkoxidpulver besteht aus nadelförmigen Teilchen mit einem Längenverhältnis von 3 bis 400 oder plättchenförmigen Teilchen mit einem Verhältnis von Länge zu Dicke von 10 bis 1000. Die Kalzinierung des Pigmentes erfolgt in einer reduzierenden Atmosphäre unter Stickstoff.

Aus EP-A-04 04 087 und EP-A-04 05 364 ist ein nadelförmiges, elektrisch leitendes Zinkoxid und ein Verfahren zu seiner Herstellung bekannt.

Eine Alkalizinkatlösung, die eine wasserlösliche Verbindung mindestens eines der Metalle Zinn, Gallium, Indium und Aluminium enthält, wird mit einer anorganischen Säure so neutralisiert, daß der pH-Wert am Ende der Reaktion im Bereich von 7 bis 12 liegt. Die dabei gebildeten Mischfällungsprodukte werden abfiltriert, gewaschen und getrocknet und anschließend in einer reduzierend wirkenden Atmosphäre kalziniert. Das erhaltene, elektrisch leitende Zinkoxid enthält 0,005 bis 5 Gewichtsteile der als Dotierungsstoff verwendeten Metalloxide pro 100 Gewichtsteile Zinkoxid. Im Vergleich zu eingearbeitetem kugeligen, elektrisch leitenden Zinkoxid ist der spezifische, elektrische Volumenwiderstand einer Folie, die das nadelförmige Produkt enthält, etwa 3 Zehnerpotenzen niedriger. Die nadelförmige Struktur des Zinkoxids führt zu einer besseren Leitfähigkeit der pigmentierten Folie.

Aus JP-A-03/200 877 ist weiterhin ein elektrisch leitendes Pulver bekannt, das aus einem Trägermaterial und einer darauf abgeschiedenen Zinkoxidschicht besteht. Das Zinkoxid ist mit einem drei- oder vierwertigen Metall dotiert. Dieses Metall kann Aluminium, Germanium, Gallium, Zinn oder Indium sein.

Als Trägermaterialien werden beispielsweise Glimmer, Kaolin, Zinkoxid, Titanoxid, Glasfaser oder Glasplättchen verwendet. Das elektrisch leitfähige Pulver wird hergestellt, indem in der wäßrigen Lösung eines Zinksalzes einer organischen Säure und eines Salzes eines drei- oder vierwertigen Metalls das Trägermaterial suspendiert wird, der pH-Wert auf 5 bis 9 eingestellt wird und die ausgefällten Metallhydroxide beziehungsweise Metalloxidhydrate auf dem Trägermaterial abgeschieden werden.

Das erhaltene Produkt wird abgetrennt, gewaschen und getrocknet und bei 500 bis 1300 °C, vorzugsweise 500 bis 900 °C in einer reduzierenden Gasatmosphäre kalziniert.

Leitfähige Pigmente auf Basis von Zinkoxid haben den Nachteil, daß bei Lagerung an der Luft ihre elektrische Leitfähigkeit über einen längeren Zeitraum hinweg deutlich abnimmt. Der spezifische Widerstand, der unmittelbar nach der Herstellung des Pigmentes bei etwa 2 bis 4 Ohm · cm liegt, kann im Verlauf von wenigen Wochen auf ein Mehrfaches des ursprünglichen Wertes ansteigen.

Es ist deshalb in P-A-0 500 445 vorgeschlagen worden, die leitfähige Schicht durch einen Überzug aus einem Metalloxid, beispielsweise Aluminiumoxid oder Siliciumdioxid, vor einer Oxidation zu schützen.

Eine Schutzschicht aus einem nichtleitenden Material hat aber den Nachteil, daß die Leitfähigkeit des Pigmentes vermindert wird.

Aufgabe der Erfindung ist es, ein leitfähiges Pigment auf Basis von Aluminium dotiertem Zinkoxid bereitzustellen, dessen elektrische Leitfähigkeit auch nach längerer Lagerung an der Luft weitestgehend stabil bleibt.

Diese Aufgabe wird gemäß der Erfindung gelöst durch ein stabilisiertes, leitfähiges Pigment auf Basis von Aluminium dotiertem Zinkoxid das zur Stabilisierung der elektrischen Leitfähigkeit ein Erdalkalititanat enthält.

Weiterhin wird diese Aufgabe gemäß der Erfindung gelöst durch ein Verfahren zur Herstellung eines stabilisierten, leitfähigen Pigmentes, indem Salze von Zink, Aluminium, Erdalkalimetallen und Titan, entweder gemeinsam oder getrennt, zusammen mit einer Wasserstoffperoxidlösung kontinuierlich und im vorbestimmten Mischungsverhältnis dem wäßrigen Reaktionsmedium, das im Falle der Verwendung eines Trägermaterials eine Suspension dieses Trägermaterials enthält, bei einem pH-Wert von 7 bis 12, vorzugsweise von 8 bis 10, bei Temperaturen von 50 bis 90 °C, vorzugsweise von 60 bis 80 °C so zudosiert werden, daß jeweils unmittelbar eine Hydrolyse der Metallsalze und eine Fällung der Oxidhydrate bzw. Hydroxide oder im Falle der Verwendung eines Trägermaterials eine Abscheidung auf dem plättchenförmigen Trägermaterial erfolgt und keine löslichen basischen Verbindungen gebildet werden.

Erdalkalimetallionen bilden unter diesen Bedingungen gemeinsam mit titanhaltigen Spezies bei Anwesenheit von Wasserstoffperoxid Titanperoxokomplexe, die durch thermische Behandlung oberhalb 500 °C in die Titanate überführbar sind (G. Pfaff, Journal of Materials Science 27 (1992), 1222-1226). Nach Beendigung der Beschichtung werden die Pigmente aus der Suspension abgetrennt, gewaschen und getrocknet und bei Temperaturen im Bereich von 500 bis 900 °C, vorzugsweise bei 550 bis 650 °C für 30 bis 60 Minuten kalziniert. Die Kalzinierung erfolgt unter Schutzgas in einer reduzierend wirkenden Atmosphäre, vorzugsweise wird ein Stickstoff-Wasserstoff-Gemisch (Formiergas) verwendet.

Gegenstand der Erfindung sind auch Lacke, Kunststoffe oder Coatings, welche mit dem erfindungsgemäßen Pigment pigmentiert sind.

Unter Zusatzstoffen zur Stabilisierung der elektrischen Leitfähigkeit sind Stoffe zu verstehen, die eine Oxydation des leitfähigen Systems verhindern. Derartige Zusatzstoffe sind Erdalkalititanate, wie Strontium-, Barium-, Calcium- oder Magnesiumtitanat oder Oxide von Elementen der III. und IV. Hauptgruppe wie Germaniumdioxid, Gallium(III)-oxid, Indium(III)-oxid und vorzugsweise Zinndioxid. Sie werden gemeinsam mit Zink und dem Dotierelement aus Lösungen ausgefällt, um eine homogene Verteilung im leitfähigen System zu erreichen.

Die Konzentration der Zusatzstoffe in der leitfähigen Schicht beträgt 0,5 bis 5 Gew.%.

Das leitfähige System, bestehend aus Aluminium dotiertem Zinkoxid, ist entweder alleiniger Bestandteil des leitfähigen Pigmentes oder es ist auf einem Trägermaterial abgeschieden.

Im leitfähigen System wird ein Verhältnis von Zink zu Aluminium von 2:1 bis 20:1, vorzugsweise von 5:1 bis 10:1, eingehalten.

Als plättchenförmige Trägermaterialien können natürlicher oder synthetischer Glimmer, andere Schichtsilikate, wie Talk, Kaolin, Sericit oder Glasplättchen verwendet werden. Im Fall von Glimmer als Trägermaterial wird eine Fraktion mit einer Teilchengröße von kleiner als 15 μm eingesetzt. Diese Trägermaterialien können auch mit einer oder mehreren Metalloxidschichten überzogen sein. Einsetzbar als Trägermaterialien sind auch plättchenförmige Pigmente, die gemäß der internationalen Anmeldung PCT/EP 92/02 351 auf einem endlosen Band hergestellt werden.

Bevorzugt als Trägermaterial sind mit Metalloxiden beschichtete Glimmerschuppen, wie sie z.B. aus der US-PS 30 87 828 und der US-PS 30 87 829 bekannt sind.

Als Metalloxide werden dabei sowohl farblose hochbrechende Metalloxide, wie insbesondere Titandioxid und/oder Zirkoniumdioxid, als auch farbige Metalloxide, wie z.B. Chromoxid, Nickeloxid, Kupferoxid, Kobaltoxid und insbesondere Eisenoxide, wie z.B. $Fe_2O_3$ oder $Fe_3O_4$ oder Mischungen solcher Metalloxide verwendet. Solche Metalloxid/Glimmerpigmente sind unter den Handelsnamen Afflair® und Iriodin® (hergestellt durch E. Merck, Darmstadt) im Handel erhältlich.

Zur Messung des spezifischen Widerstandes der Pigmente wird in einem Acrylglas-Rohr mit dem Durchmesser von 2 cm eine kleine Menge von etwa 0,5 g Pigment mit Hilfe eines Gewichts von 10 kg zwischen zwei Metallstempel zusammengepreßt. Von den so verpreßten Pigmenten wird der elektrische Widerstand R gemessen. Aus der Schichtdicke L des komprimierten Pigments ergibt sich der spezifische Widerstand ρ nach der Beziehung

$$\rho = R \cdot \frac{\pi \cdot (d/2)^2}{L} \ [Ohm \cdot cm]$$

Zur Messung des Widerstandes des pigmentierten Anwendungssystems, beispielsweise eines Lackes, werden 15 Gewichtsteile Pigment in 85 Gewichtsteile Bindemittellösung (Acryl-Melamin-Harz) eingearbeitet. Von diesem Lack wird ein dünner Film auf ein Blech aufgebracht und der Oberflächenwiderstand nach DIN-Norm 53596 mit Hilfe einer Federzungenelektrode gemessen.

Die elektrische Leitfähigkeit des erfindungsgemäßen Pigmentes verschlechtert sich bei längerer Lagerung an der Luft nur im geringen Umfang. Der elektrische Widerstand, gemessen nach der oben angegebenen Methode, liegt unmittelbar nach der Herstellung bei 2 bis 3 kOhm · cm. Nach einer Lagerzeit von 4 Wochen erhöht sich dieser Wert etwa auf das Doppelte.

Dagegen steigt bei einem nichtstabilisierten Pigment im gleichen Zeitraum der elektrische Widerstand bereits auf ein Mehrfaches des ursprünglichen Wertes.

Im Anwendungssystem (Lack) bleibt der Widerstand dagegen weitestgehend konstant. Das ist ein Hinweis darauf, daß die Verschlechterung der elektrischen Leitfähigkeit des Pigmentes nach längerer Lagerung an der Luft auf eine Oxydation des leitfähigen Systems zurückzuführen ist.

Die nachfolgenden Beispiele sollen die Erfindung näher erläutern, ohne sie jedoch zu beschränken.

Beispiel 1

50 g Glimmer mit einer Teilchengröße < 15 μm werden in 1800 ml vollentsalztem Wasser suspendiert, auf 75 °C erhitzt und innerhalb von 4 Stunden unter Rühren kontinuierlich mit 1000 ml einer salzsauren Lösung versetzt, welche

166,3 g $ZnCl_2$, 11,8 g $AlCl_3 \cdot 6\ H_2O$, 0,8 g $CaCl_2$ und 10 ml konz. HCl enthält. Gleichzeitig werden in diesem Zeitraum 0,7 g $TiCl_4$ der Glimmersuspension zudosiert. Der pH-Wert wird während der gesamten Reaktionszeit mit Hilfe von 10%iger Natronlauge konstant auf 9,0 gehalten. Gleichzeitig mit der Natronlauge werden 10 ml 30%ige $H_2O_2$-Lösung zudosiert. Während der Umsetzung werden die zugegebenen Zink- und Aluminiumionen in Form ihrer Hydroxide beziehungsweise Oxidhydrate auf dem Glimmer abgeschieden. Die Calciumionen bilden gemeinsam mit den Titanspezies Peroxokomplexe, deren spätere Zersetzung beim Glühen zu einem $CaTiO_3$-Gehalt von 0,5 % in der leitfähigen Schicht führt. Am Ende der Umsetzung läßt man 30 Min. bei 75 °C nachrühren und anschließend 10 Stunden absitzen. Der Feststoff wird abfiltriert, mit ca. 20 l Wasser chloridfrei gewaschen und bei 110 °C getrocknet. Das so erhaltene Produkt wird unter einer Stickstoff-Wasserstoff-Gasatmosphäre für 30 Min. bei 600 °C kalziniert.

Der spezifische Widerstand des Pigmentes beträgt 2 kOhm · cm. Nach einer Woche stieg der spezifische Widerstand auf 3 kOhm · cm und nach 4 Wochen auf 6 kOhm · cm an.

## Tabelle 1

### Beispiele 2 bis 8 und Vergleichsbeispiel

| Beispiel | zudosierte Komponenten in g | | | | | Zusatzstoff | Spezifischer Pulverwiderstand in kOhm · cm nach | | |
|---|---|---|---|---|---|---|---|---|---|
| | Glimmer | $TiCl_4$ | $ZnCl_2$ | $AlCl_3 \cdot 6\,H_2O$ | $MeCl_2 \cdot 6\,H_2O$ [1] | | Herstellung | 1 Woche | 4 Wochen |
| 2 | 50 | 1,4 | 166,3 | 11,8 | 1,6 | 1 % $CaTiO_3$ | 2 | 3 | 5 |
| 3 | 50 | 4,2 | 166,3 | 11,8 | 4,9 | 3 % $CaTiO_3$ | 2 | 3 | 4 |
| 4 | 50 | 0,5 | 166,3 | 11,8 | 0,7 | 0,5 % $SrTiO_3$ | 3 | 5 | 7 |
| 5 | 50 | 1,1 | 166,3 | 11,8 | 1,5 | 1 % $SrTiO_3$ | 3 | 4 | 6 |
| 6 | 50 | 3,2 | 166,3 | 11,8 | 4,4 | 3 % $SrTiO_3$ | 3 | 4 | 6 |
| 7 | 50 | 0,8 | 166,3 | 11,8 | 0,9 | 0,5 % $MgTiO_3$ | 3 | 4 | 8 |
| 8 | 50 | 0,4 | 166,3 | 11,8 | 0,5 [2] | 0,5 % $BaTiO_3$ | 3 | 4 | 8 |
| Vergleichs-beispiel | 50 | - | 166,3 | 11,8 | - | - | 2 | 4 | 8 |

[1] Me = Mg, Ca, Sr

[2] $BaCl_2 \cdot 2\,H_2O$

EP 0 639 625 B1

Die Beispiele 2 bis 8 sind in Tabelle 1 zusammen mit einem Vergleichsbeispiel dargestellt.

Der pH-Wert wird mit 10%iger Natronlauge konstant gehalten. Ausgenommen beim Vergleichsbeispiel wurden zusammen mit der Natronlauge 10 ml 30%ige $H_2O_2$-Lösung zudosiert.

Der pH-Wert wurde in den Beispielen 2 bis 8 bei 9,0 und im Vergleichsbeispiel (ohne Zusatzstoff) bei 7,0 konstant gehalten.

**Patentansprüche**

1. Stabilisiertes, leitfahiges Pigment auf Basis von Aluminium dotiertem Zinkoxid, dadurch gekennzeichnet, daß es zur Stabilisierung der elektrischen Leitfähigkeit ein Erdalkalititanat enthält.

2. Pigment nach Anspruch 1, dadurch gekennzeichnet, daß das Erdalkalititanat, Magnesiumtitanat, Calciumtitanat, Strontiumtitanat oder Bariumtitanat ist.

3. Verfahren zur Herstellung eines stabilisierten, leitfähigen Pigmentes nach den Ansprüchen 1 und 2, dadurch gekennzeichnet, daß die Salze von Zink, Aluminium einem Erdalkalimetall und Titan entweder gemeinsam oder getrennt, zusammen mit
einer Wasserstoffperoxidlösung kontinuierlich und im vorbestimmten Mischungsverhältnis dem wäßrigen Reaktionsmedium, das gegebenenfalls eine Suspension eines Tragermaterials enthält, bei einem pH-Wert von 7 bis 12, vorzugsweise von 7 bis 9, und einer Temperatur im Bereich von 40 bis 90 °C, vorzugsweise von 60 bis 80 °C, so zudosiert werden, daß jeweils unmittelbar eine Hydrolyse der Metallsalze und eine Fällung der Hydroxide bzw. Oxidhydrate oder im Falle der Verwendung eines Trägermaterials eine Abscheidung auf dem Trägermaterial erfolgt, das Pigment abgetrennt, gewaschen und getrocknet und bei Temperaturen von 500 bis 900 °C, vorzugsweise von 550 bis 650 °C, für 30 bis 60 Minuten unter Schutzgas in einer reduzierend Wirkenden Atmosphäre, vorzugsweise in einer Stickstoff - Wasserstoff - Atmosphäre, kalziniert wird.

4. Verwendung des Pigmentes nach den Ansprüchen 1 und 2 zur Pigmentierung von Lacken, Druckfarbe, Kunststoffen oder Coatings.

**Claims**

1. Stabilized conductive pigment based on aluminium-doped zinc oxide, characterized in that it contains an alkaline earth metal titanate to stabilize the electric conductivity.

2. Pigment according to Claim 1, characterized in that the alkaline earth metal titanate is magnesium titanate, calcium titanate, strontium titanate or barium titanate.

3. Process for preparing a stabilized conductive pigment according to Claims 1 and 2, characterized in that the salts of zinc, aluminium, an alkaline earth metal and titanium are metered, either jointly or separately, together with a hydrogen peroxide solution, continuously and at a predetermined mixing ratio to the aqueous reaction medium, which may contain a suspension of a support, at a pH of 7 to 12, preferably 7 to 9, and a temperature ranging from 40 to 90°C, preferably from 60 to 80°C, in such a manner that in each case hydrolysis of the metal salts and precipitation of the hydroxides or hydrated oxides or, in the case where a support is used, deposition on the support take place immediately, the pigment is separated off, washed and dried and calcined at temperatures of 500 to 900°C, preferably 550 to 650°C, in a reducing inert gas atmosphere, preferably in a nitrogen/hydrogen atmosphere, for 30 to 60 minutes.

4. Use of the pigment according to Claims 1 and 2 for pigmenting varnishes, printing ink, plastics or coatings.

**Revendications**

1. Pigment conducteur stabilisé à base d'oxyde de zinc dopé à l'aluminium, caractérisé en ce que, pour stabiliser la conductivité électrique, il contient un titanate d'un métal alcalino-terreux.

2. Pigment selon la revendication 1, caractérisé en ce que le titanate d'un métal alcalino-terreux est le titanate de magnésium, le titanate de calcium, le titanate de strontium ou le titanate de baryum.

3. Procédé de préparation d'un pigment conducteur stabilisé selon les revendications 1 et 2, caractérisé en ce que les sels de zinc, d'aluminium, d'un métal alcalino-terreux et de titane sont, en commun ou séparément, en même temps qu'une solution de peroxyde d'hydrogène, en continu et selon un rapport de mélange prédéterminé, ajoutés au milieu réactionnel aqueux, qui éventuellement contient une suspension d'un matériau support, à un pH de 7 à 12, de préférence de 7 à 9, et à une température de 40 à 90°C, de préférence de 60 à 80°C, de façon que dans chaque cas se produise immédiatement une hydrolyse des sels métalliques et une précipitation des hydroxydes ou des hydrates ou encore, dans le cas de l'utilisation d'un matériau support, une séparation sur le matériau support, le pigment est séparé, lavé et séché, et, à des températures de 500 à 900°C et de préférence de 550 à 650°C, est calciné pendant 30 à 60 minutes sous une couverture d'un gaz protecteur dans une atmosphère à effet réducteur, de préférence dans une atmosphère d'azote-hydrogène.

4. Utilisation du pigment selon les revendications 1 et 2 pour pigmenter des vernis, des encres d'imprimerie, des matières plastiques ou des revêtements.